**Europäisches Patentamt**

**European Patent Office**

**Office européen des brevets**

(19)

(11) Veröffentlichungsnummer: **0 106 907**
**B1**

(12) # EUROPÄISCHE PATENTSCHRIFT

(45) Veröffentlichungstag der Patentschrift:
07.01.88

(51) Int. Cl.⁴: **B 27 B 5/34**

(21) Anmeldenummer: **82109768.0**

(22) Anmeldetag: **22.10.82**

---

(54) **Kreissäge mit verstellbaren Sägeblättern.**

---

(43) Veröffentlichungstag der Anmeldung:
**02.05.84 Patentblatt 84/18**

(45) Bekanntmachung des Hinweises auf die Patenterteilung:
**07.01.88 Patentblatt 88/1**

(84) Benannte Vertragsstaaten:
**AT DE FR SE**

(56) Entgegenhaltungen:
**EP - A - 0 047 871**
**DE - A - 2 206 261**
**DE - B - 885 147**
**DE - B - 1 029 551**
**DE - C - 974 448**
**FR - A - 2 409 137**
**US - A - 2 292 872**
**US - A - 3 630 244**
**US - A - 3 750 513**
**US - A - 3 779 117**

(73) Patentinhaber: **Gebrüder Linck, Maschinenfabrik "Gatterlinck" GmbH & Co.KG, Appenwelerer Strasse 46, D-7602 Oberkirch (DE)**

(72) Erfinder: **Der Erfinder hat auf seine Nennung verzichtet**

(74) Vertreter: **Katscher, Helmut, Dipl.-Ing., Bismarckstrasse 29, D-6100 Darmstadt (DE)**

---

## Beschreibung

Die Erfindung betrifft eine Kreissäge mit einem Maschinengestell und mehreren koaxial angeordneten, axial verstellbaren Sägeblättern, die jeweils am Ende einer Hohlwelle angebracht sind, die in einer mit einer Antriebseinrichtung verbundenen hohlen Antriebsspindel undrehbar, jedoch axial verschiebbar geführt sind, wobei die Hohlwellen auf einer Innenwelle axial verschiebbar geführt und jeweils mit einer Axial-Verstelleinrichtung verbunden sind.

Kreissägen mit mehreren koaxial nebeneinander angeordneten Sägeblättern ermöglichen eine sehr hohe Arbeitsgeschwindigkeit. Das durch mehrere Sägeschnitte zu unterteilende Brett, Kantholz oder Modell kann mit sehr hoher Vorschubgeschwindigkeit durch eine Kreissäge geführt werden. Bei Kreissägen mit axial verstellbaren Sägeblättern besteht jedoch die Schwierigkeit, dass die gegenseitig verstellbaren Sägeblätter nicht nahe genug nebeneinander angeordnet werden können, um beispielsweise Bretter mit einer Dicke von 24 mm aus einem Model zu schneiden.

Dabei können alle Sägeblätter auf einer gemeinsamen Sägewelle axial verschiebbar angeordnet sein. Bei einer bekannten Bauart (DE-C-22 45 775) ist jedes Sägeblatt mit einer auf der Sägewelle drehfest, jedoch axial verschiebbar geführten Nabe verbunden. Mindestens auf einer Seite des Sägeblatts muss diese Nabe wegen der notwendigen Führung auf der Sägewelle und wegen der Verbindung mit einer Verstelleinrichtung so breit ausgeführt sein, dass mindestens auf dieser Seite keine ausreichend enge Annäherung an ein benachbartes Sägeblatt möglich ist.

Weiterhin ist es z.B. aus US-A-37 79 117 bekannt, auf beiden Seiten eines Baumstammes jeweils ein fliegend gelagertes Kreissägeblatt anzuordnen. Dabei werden auf jeder Seite des zu bearbeitenden Baumstammes mehrere Kreissägen eingesetzt, die in Vorschubrichtung gestaffelt angeordnet sind.

FR-A-2 409 137 beschreibt eine Kreissäge mit zwei übereinander angeordneten Paaren von fliegend gelagerten Kreissägeblättern, die axial verstellt werden können.

Bei einer anderen bekannten Kreissäge der eingangs genannten Gattung (US-A-36 30 244) ist an jedem Ende dreier gesonderter Hohlwellen ein Kreissägeblatt angebracht. Alle Hohlwellen erstrecken sich nur nach einer Richtung und sind mit jeweils einer gesonderten Axial-Verstelleinrichtung verbunden. Die alle Hohlwellen tragende Innenwelle ist an ihren beiden Enden drehbar, jedoch axial unverschiebbar gelagert. Das Auswechseln der Kreissägeblätter ist aufwendig, weil hierfür die Innenwelle demontiert werden muss.

Ausgehend von diesem Stand der Technik liegt der Erfindung daher die Aufgabe zugrunde, eine Kreissäge der eingangs genannten Gattung zu schaffen, bei der koaxial mehr als drei Sägeblätter vorgesehen werden können, die zum Auswechseln gut zugänglich sind.

Diese Aufgabe wird erfindungsgemäss dadurch gelöst, dass zwei gegeneinander gerichtete, koaxial und mit Abstand zueinander angeordnete, fliegend gelagerte Kreissägeköpfe jeweils die an ihrem inneren Ende mindestens ein Sägeblatt tragende Hohlwelle aufweisen, dass jedem Kreissägekopf eine gesonderte, fliegend gelagerte Innenwelle zugeordnet ist, die in jeder Hohlwelle undrehbar, jedoch axial verschiebbar geführt ist und jeweils an ihrem inneren Ende eine weiteres Sägeblatt trägt, und dass jede Innenwelle ebenfalls jeweils mit einer Axial-Verstelleinrichtung verbunden ist.

Durch die Verteilung der Sägeblätter auf zwei einander im Abstand gegenüber stehende, jeweils fliegend gelagerte Kreissägeköpfe hält sich der erforderliche konstruktive Aufwand auch bei der Verwendung von vier oder mehr Sägeblättern in Grenzen. Insbesondere sind die Sägeblätter vom freien Ende der beiden Innenwellen her gut zugänglich.

Am Ende einer Welle, nämlich der Innenwelle, lassen sich die Sägeblätter an so schmalen Flanschen befestigen, dass bei der Verstellung der Sägeblätter eine wesentlich stärkere axiale Annäherung an das jeweils benachbarte Sägeblatt möglich ist. Da aus konstruktiven Gründen innerhalb der axial verstellbaren Hohlwelle nur eine Innenwelle, nicht jedoch eine weitere, die Innenwelle umgebende Hohlwelle angeordnet werden kann, erreicht man die für die Stammaufteilung erforderliche Anzahl von axial gegeneinander verstellbaren Sägeblättern dadurch, dass sich zwei gleich aufgebaute Sägeköpfe mit jeweils einer verstellbaren Hohlwelle und einer darin verstellbaren Innenwelle gegenüberstehen. Da die beiden Sägeköpfe von der Mitte der Kreissäge aus zugänglich sind, d.h. weil die Sägeblätter im Gegensatz zum Stand der Technik nach US-A-3 630 244 nicht auf einer gemeinsamen Sägewelle angeordnet sind, wird das Auswechseln der Sägeblätter wesentlich erleichtert, weil diese abgenommen und aufgesetzt werden können, ohne dass eine Welle demontiert werden muss.

Um eine radiale Verstellmöglichkeit zu schaffen, beispielsweise um die Eintauchtiefe zur Anpassung an unterschiedliche Holzdicken verändern zu können, sind gemäss einer vorteilhaften Ausgestaltung des Erfindungsgedankens die beiden Antriebsspindeln jeweils in einer Schwinge gelagert; die beiden Schwingen sind auf einer gemeinsamen, im Maschinengestell drehbar gelagerten Welle befestigt. Dadurch ist sichergestellt, dass die Sägeblätter der beiden Kreissägeköpfe bei einer radialen Verstellung ihre koaxiale Anordnung beibehalten.

Ausserdem können die Axial-Verstelleinrichtungen, die mit den äusseren Enden der Hohlwellen bzw. der Innenwellen in Eingriff stehen, an den beiden Schwingen befestigt sein, so dass die Axial-Verstelleinrichtungen die radialen Einstellbewegungen mitmachen.

Weitere vorteilhafte Ausgestaltungen des Erfindungsgedankens sind Gegenstand von abhängigen Ansprüchen.

Die Erfindung wird nachfolgend an Ausführungsbeispielen näher erläutert, die in der Zeichnung dargestellt sind.

Es zeigt:

Fig. 1 eine Kreissäge in vereinfachter Seitenansicht,

Fig. 2 einen Schnitt längs der Linie II–II in Fig. 1,

Fig. 3 einen vergrösserten Teilschnitt durch die beiden einander gegenüberstehenden Sägeköpfe,

Fig. 4 a)–d) verschiedene Einstellmöglichkeiten der Kreissäge nach Fig. 1 und 2 am Beispiel der Aufteilung eines Models,

Fig. 5 eine Doppelwellen-Kreissäge in vereinfachter Seitenansicht,

Fig. 6 einen Teilschnitt längs der Linie VI–VI in Fig. 5 und

Fig. 7 einen Teilschnitt längs der Linie VII–VII in Fig. 6.

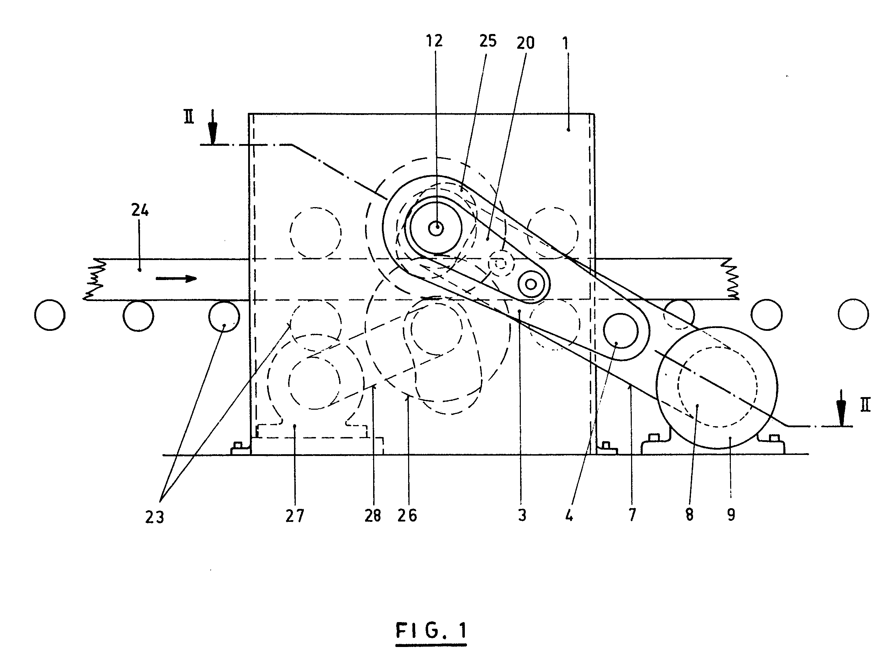

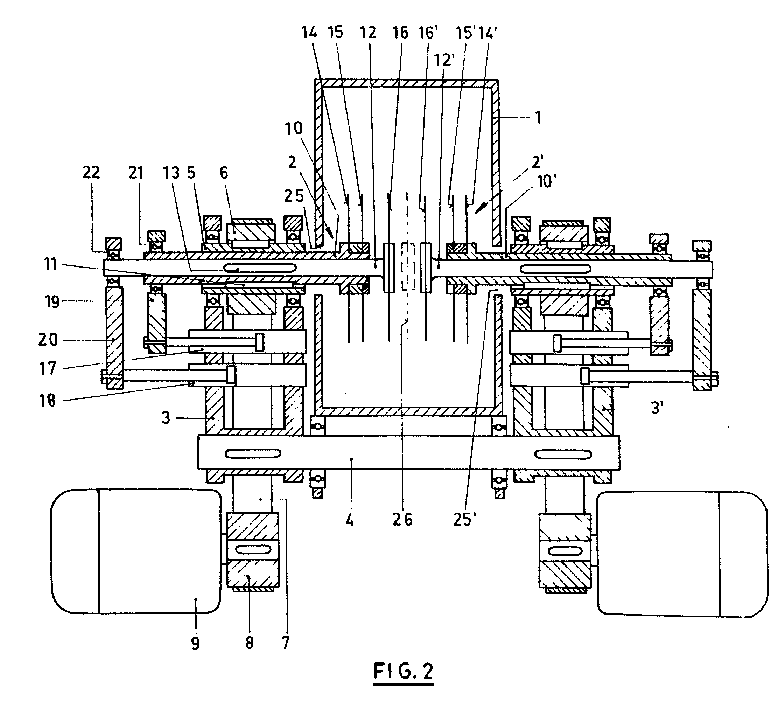

Die in den Fig. 1 und 2 gezeigte Kreissäge weist ein als Gehäuse ausgeführtes Maschinengestell 1 auf, an dem zwei gegeneinander gerichtete, symmetrisch aufgebaute Kreissägeköpfe 2, 2' angeordnet sind, von denen nachfolgend nur der links in Fig. 2 angeordnete Kreissägekopf 2 mit seinen zugehörigen Bauteilen näher beschrieben wird.

In einer zweiarmigen, im wesentlichen U-förmigen Schwinge 3, die auf einer im Maschinengestell 1 gelagerten Welle 4 befestigt ist, ist eine hohle Antriebsspindel 5 drehbar gelagert. Auf der Antriebsspindel 5 ist eine Riemenscheibe 6 aufgekeilt, die über einen Riementrieb 7 und eine weitere Riemenscheibe 8 von einem Antriebsmotor 9 angetrieben wird. Der ortsfest angeordnete Antriebsmotor 9 ist auf der der Antriebsspindel 5 abgekehrten Seite der Welle 4 angebracht. Bei einer begrenzten Schwenkbewegung der Schwinge 3 ändert sich daher die Riemenspannung des Riementriebs 7 kaum.

In der hohlen Antriebsspindel 5 ist eine Hohlwelle 10 mittels einer Passfeder 11 undrehbar, jedoch axial verschiebbar geführt. Innerhalb der Hohlwelle 8 ist eine Innenwelle 12 mittels einer Passfeder 13 ebenfalls undrehbar, jedoch axial verschiebbar geführt.

Die Hohlwelle 10 trägt an ihrem inneren Ende z.B. zwei in axialem Abstand zueinander angeordnete Sägeblätter 14, 15. Die Innenwelle 12 trägt an ihrem inneren Ende z.B. ein weiteres Sägeblatt 16. In entsprechender Weise sind beim anderen Sägekopf 2' am inneren Ende der Hohlwelle 10' zwei Sägeblätter 14', 15' angebracht, während die Innenwelle 12' an ihrem inneren Ende ein Sägeblatt 16' trägt.

Als Axial-Verstelleinrichtungen 17, 18 dienende Druckmittelzylinder sind an der Schwinge 3 befestigt und stehen mit ihren Kolbenstangen über jeweils einen Führungsträger 19 bzw. 20 und jeweils ein Axiallager 21, 22 mit dem äusseren Ende der Hohlwelle 10 bzw. der Innenwelle 12 in Verbindung. Durch Betätigung der Axial-Verstelleinrichtungen 17, 18 können die Hohlwelle 10 und die Innenwelle 12 axial verschoben werden, um die Sägeblätter 14, 15 und 16 axial zu verstellen, wobei die Hohlwelle 10 und die Innenwelle 12 jedoch in Antriebsverbindung mit der Antriebsspindel 5 bleiben.

Mit dem Maschinengestell 1 ist eine in Fig, 1 nur angedeutete Transport- und Vorschubeinrichtung 23 in Form von Rollen, Walzen, einem Kettenbett od.dgl. vorgesehen, die das zu sägende Holzteil, im dargestellten Beispiel ein zweiseitig angeflachtes Model 24 durch die Kreissäge transportieren.

Zur Einstellung unterschiedlicher Schnittiefen, d.h. zur Anpassung an unterschiedliche Holzdikken mit verschieden grossen Kreissägeblättern sind die beiden Schwingen 3, 3' der beiden Sägeköpfe 2, 2', die durch die Welle 4 starr miteinander verbunden sind, mittels einer (nicht dargestellten) Verstelleinrichtung gemeinsam schwenkbar, wobei sich die Hohlwellen 10, 10' in länglichen seitlichen Öffnungen 25, 25' des Maschinengestells 1 bewegen.

Um die Anzahl der möglichen Sägeschnitte noch zu erhöhen, kann unterhalb der beiden Sägeköpfe 2, 2' ein mittleres Sägeblatt 26 vorgesehen sein, das in den Fig. 1 und 2 nur mit gestrichelten Linien angedeutet ist. In Fig. 1 ist weiter angedeutet, dass das von einem Antriebsmotor 27 über einen Riementrieb 28 angetriebene mittlere Sägeblatt 26 höhenverstellbar im Machinengestell 1 geführt sein kann, um das Sägeblatt 26 ausser Eingriff mit dem zu sägenden Holz zu bringen, wenn es nicht benötigt wird.

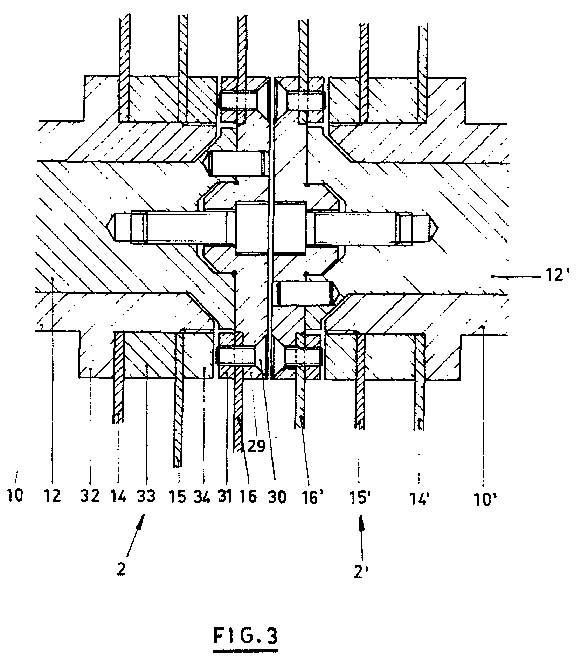

Wie man in Einzelheiten aus Fig. 3 erkennt, ist an dem inneren Ende der Innenwelle 12 ein abnehmbarer Tragflansch 29 angeschraubt. Das Sägeblatt 16 ist an der Aussenseite des Tragflanschs 29 mittels Schrauben 30 und einem Spannring 31 befestigt.

Die Hohlwelle 10 ist mit einem im Abstand zu ihrem inneren Ende angeordneten Flansch 32 einstückig ausgeführt. An der Innenseite des Flansches 32 liegt das Sägeblatt 14 an. Ein Abstandsring 33 und das Sägeblatt 15 werden durch einen auf das Ende der Hohlwelle 10 aufgeschraubten Mutterring 34 gehalten. Anstelle der zwei dargestellten Sägeblätter 14, 15 können auch ein Sägeblatt oder drei oder vier Sägeblätter auf der Hohlwelle 10 befestigt sein.

Aus der unmittelbar benachbarten Anordnung der Sägeblätter 14, 15, 16, 14', 15' und 16', wobei das mittlere Sägeblatt 26 weggelassen wurde, erkennt man in Fig. 3, dass die Sägeblätter sehr dicht nebeneinander angeordnet werden können, beispielsweise in einem kleinsten gegenseitigen Abstand von 24 mm.

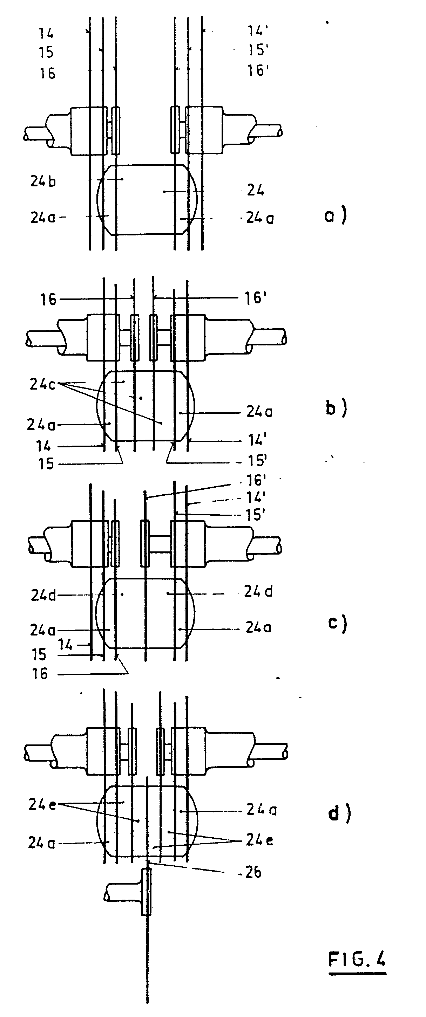

Fig. 4 zeigt die unterschiedlichen Verstellmöglichkeiten der Kreissäge nach den Fig. 1–3 am Beispiel der Aufteilung des Models 24. Derartige unterschiedliche Aufteilungen werden in der Praxis häufig bei der Erzeugung von Bauholz notwendig, da dort in vielen Fällen sehr individuelle Querschnittsabmessungen gefordert werden.

Bei der in Fig. 4a) gezeigten Einstellung schneiden die Sägeblätter 15, 16 und 15', 16' zwei Seitenbretter 24a ab, während in der Mitte ein Balken 24b bleibt. Die Sägeblätter 14 und 14' sind hierbei nicht im Einsatz.

Wenn auch der mittlere Balkenquerschnitt 24b in drei Bohlen 24c zerlegt werden soll (Fig. 4b), so geschieht dies durch die Sägeblätter 16, 16', während die dünneren Seitenbretter 24a zwischen den Sägeblättern 14 und 15 bzw. 14', 15' entstehen.

Wenn der mittlere Balkenquerschnitt 24b nur in zwei dicke Bohlen 24d zerlegt werden soll (Fig. 4c), so geschieht dies durch das Sägeblatt 16'. Auf der einen Seite des Models 24 schneiden die Sägeblätter 15' und 14' das Seitenbrett 24a, während das Seitenbrett auf .der anderen Seite zwischen den Sägeblättern 16 und 15 entsteht; nur das Sägeblatt 14 ist hierbei ausser Einsatz.

Wenn zwischen den beiden Seitenbrettern 24a vier Bretter 24e entstehen sollen (Fig. 4d), erfolgt die Aufteilung ähnlich wie bei Fig. 4b), wobei jedoch noch zusätzlich das mittlere Sägeblatt 26 eingesetzt wird.

Bei den in Fig. 4 dargestellten Einsatzmöglichkeiten, die sich noch weiter verändern lassen, erkennt man mehrere Stellungen, in denen benachbarte, gegeneinander verstellbare Sägeblätter auf einen gegenseitigen Abstand gebracht werden müssen, der der Dicke des jeweils dünnsten herzustellenden Brettes entspricht.

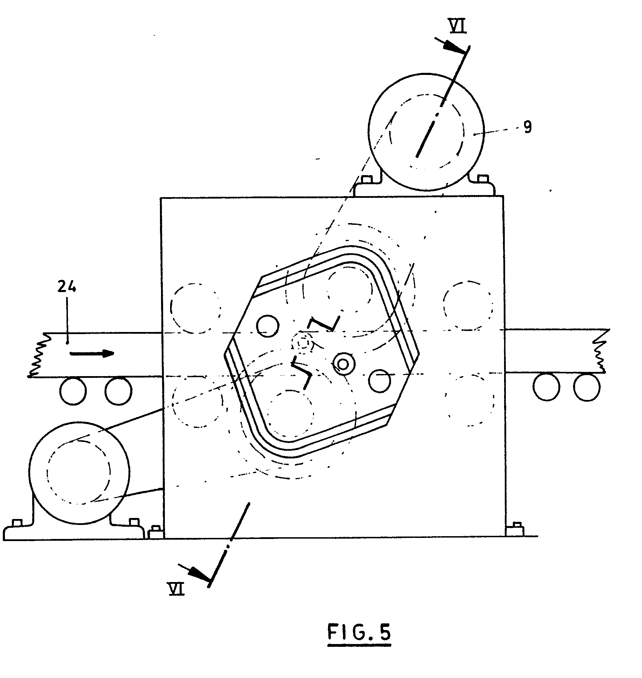

Bei der in Fig. 5–7 gezeigten Doppelwellen-Kreissäge erfolgt der Sägeschnitt des Models 24 gleichzeitig von oben und unten, um die notwendige Eintauchtiefe der Kreissägen gering zu halten.

Zusätzlich zu den beiden bereits beschriebenen Kreissägeköpfen 2, 2' sind zwei weitere, gleich aufgebaute und ebenfalls zueinander koaxiale Kreissägeköpfe 102, 102' achsparallel zu den Kreissägeköpfen 2, 2' angeordnet. Jeweils die beiden Innenwellen 12 und die beiden Hohlwellen 10 der beiden auf einer Maschinenseite angeordneten Kreissägeköpfe 2 und 102 sind durch jeweils einen gemeinsamen Führungsträger 120 bzw. 119 miteinander und mit der Kolbenstange der jeweils zugeordneten, Axial-Verstelleinrichtung 17 bzw. 18 verbunden, die hierbei unmittelbar im Maschinengestell 1 befestigt sind.

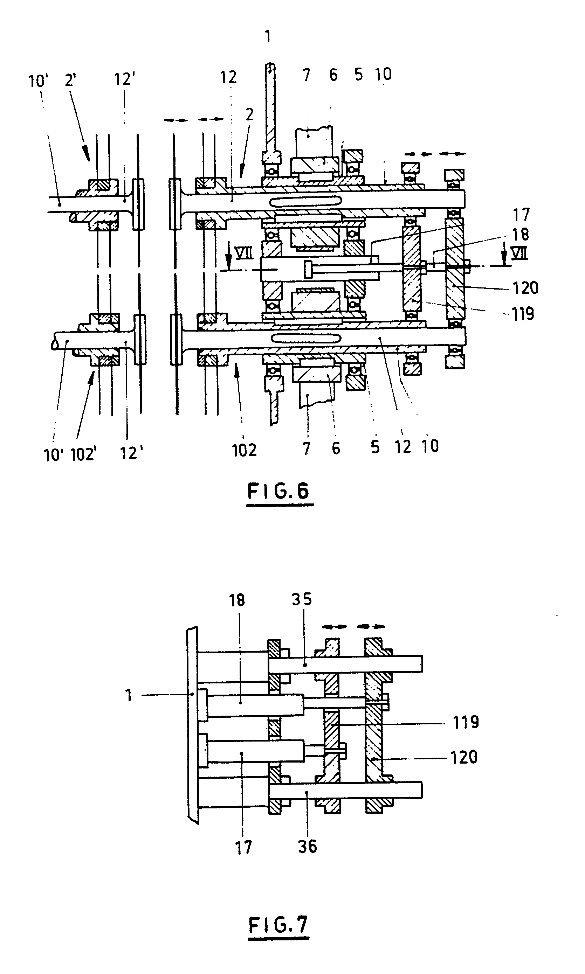

Aus Fig. 7 erkennt man, dass die beiden Führungsträger 119, 120 auf zwei seitlichen Führungsstangen 35, 36 geführt sind, die mit dem Maschinengestell 1 verbunden sind. Die Kolbenstange der einen Axial-Verstelleinrichtung 18 ragt durch eine Bohrung des Führungsträgers 119.

Weitere Teile der Kreissäge nach den Fig. 5–7, die mit den entsprechenden Teilen der Kreissäge nach den Fig. 1–3 übereinstimmen, sind mit gleichen Bezugszeichen versehen.

## Patentansprüche

1. Kreissäge mit einem Maschinengestell (1) und mehreren koaxial angeordneten, axial verstellbaren Sägeblättern (15, 15'), die jeweils am Ende einer Hohlwelle (10, 10') angebracht sind, die in einer mit einer Antriebseinrichtung (6, 7, 8, 9) verbundenen hohlen Antriebsspindel (5) undrehbar, jedoch axial verschiebbar geführt sind, wobei die Hohlwellen (10, 10') auf einer Innenwelle (12, 12') axial verschiebbar geführt und jeweils mit einer Axial-Verstelleinrichtung (17) verbunden sind, dadurch gekennzeichnet, dass zwei gegeneinander gerichtete, koaxial und mit Abstand zueinander angeordnete, fliegend gelagerte Kreissägeköpfe (2, 2'; 102, 102') jeweils die an ihrem inneren Ende mindestens ein Sägeblatt (14, 14', 15, 15') tragende Hohlwelle (10, 10') aufweisen, dass jedem Kreissägekopf (2, 2'; 102, 102') eine gesonderte, fliegend gelagerte Innenwelle (12, 12') zugeordnet ist, die in jeder Hohlwelle (10, 10') undrehbar, jedoch axial verschiebbar geführt ist und jeweils an ihrem inneren Ende ein weiteres Sägeblatt (16, 16') trägt, und dass jede Innenwelle (12, 12') ebenfalls jeweils mit einer Axial-Verstelleinrichtung (18) verbunden ist.

2. Kreissäge nach Anspruch 1, dadurch gekennzeichnet, dass die beiden Antriebsspindeln (5) jeweils in einer Schwinge (3, 3') gelagert sind und dass die beiden Schwingen (3, 3') auf einer gemeinsamen, im Maschinengestell (1) drehbar gelagerten Welle (4) befestigt sind.

3. Kreissäge nach Anspruch 2, dadurch gekennzeichnet, dass die Axial-Verstelleinrichtung (17, 18) an den beiden Schwingen (3, 3') befestigt sind und mit den äusseren Enden der Hohlwellen (10, 10') bzw. der Innenwellen (12, 12') in Eingriff stehen.

4. Kreissäge nach Anspruch 1, dadurch gekennzeichnet, dass zwischen den beiden von den Innenwellen (12, 12') getragenen Sägeblättern (16, 16') auf einer hierzu achsparallelen Sägewelle ein mittleres Sägeblatt (26) angeordnet ist.

5. Kreissäge nach Anspruch 1, dadurch gekennzeichnet, dass achsparallel zu den beiden Kreissägeköpfen (2, 2') zwei weitere, gleich aufgebaute und ebenfalls koaxiale Kreissägeköpfe (102, 102') angeordnet sind, und dass jeweils die beiden Innenwellen (12) und die beiden Hohlwellen (10) der beiden auf einer Maschinenseite angeordneten Kreissägeköpfe (2, 102 bzw. 2', 102') durch jeweils einen.gemeinsamen, mit einer Verstelleinrichtung (18 bzw. 17) verbundenen Führungsträger (120 bzw. 119) verbunden sind, in dem die beiden Innenwellen (12) bzw. die beiden Hohlwellen (10) drehbar, jedoch axial unverschiebbar gelagert sind.

6. Kreissäge nach Anspruch 2, dadurch gekennzeichnet, dass jede der beiden Antriebsspindeln (5) eine Riemenscheibe (6) trägt, die über einen Riementrieb (7) angetrieben wird, dessen Antriebsmotor (9) auf der der Antriebsspindel (5) abgekehrten Seite der die beiden Schwingen (3, 3') tragenden Welle (4) angeordnet ist.

7. Kreissäge nach Anspruch 1, dadurch gekennzeichnet, dass das innere Ende jeder Innenwelle (12, 12') einen abnehmbaren Tragflansch (29) aufweist, der das Sägeblatt (16 bzw. 16') trägt, und dass das Sägeblatt bzw. die Sägeblätter (14, 15 bzw. 14', 15') zum Tragflansch (29) der Innenwelle (12 bzw. 12') hin abnehmbar auf der Hohlwelle (10 bzw. 10') befestigt sind.

## Claims

1. Circular saw with a machine frame (1) and several coaxially arranged, axially adjustable saw blades (15, 15'), which are each fitted at the end of a hollow shaft (10, 10'), which are guided non-rotatably but axially movably in a hollow drive spindle (5) connected to a drive device (6, 7, 8, 9), the hollow shafts (10, 10') being guided axially movably on an inner shaft (12, 12') and each connected with an axial adjustment device (17), characterised by the fact that two over-mounted circular saw heads (2, 2'; 102, 102'), directed against each other, arranged coaxially and at a distance from each other each have a hollow shaft (10, 10') carrying at its inner end at least one saw blade (14, 14', 15, 15'), that a separate over-mounted inner shaft (12, 12') is assigned to each circular saw head (2, 2'; 102, 102'), which is guided non-rotatably but axially movably in each hollow shaft (10, 10') and in each case carries another saw blade (16, 16') at its inner end, and that each inner shaft (12, 12') is connected with an axial adjustment device (18).

2. Circular saw according to Claim 1, characterised by the fact that the two drive spindles (5) are each mounted in a rocker arm (3, 3') and that the two rocker arms (3, 3') are fixed on a common shaft (4) mounted rotatably in the machine frame (1).

3. Circular saw according to Claim 2, characterised by the fact that the axial adjustment devices (17, 18) are fixed on the two rocker arms (3, 3') and are engaged with the outer ends of the hollow shafts (10, 10') or the inner shafts (12, 12').

4. Circular saw according to Claim 1, characterised by the fact that between the two saw blades (16, 16') carried by the inner shafts (12, 12'), a central saw blade (26) is arranged on a saw shaft axially parallel to these.

5. Circular saw according to Claim 1, characterised by the fact that two further identically constructed and similarly coaxial circular saw heads (102, 102') are arranged axially parallel to the two circular saw heads (2, 2'), and that in each case the two inner shafts (12) and the two hollow shafts (10) of the two circular saw heads (2, 102 or 2', 102') arranged on one side of the machine are connected with a common guide carrier (120 or 119) connected to an adjustment device (18 or 17), in which the two inner shafts (12) or the two hollow shafts (10) are mounted rotatably but not axially movably.

6. Circular saw according to Claim 2, characterised by the fact that each of the two drive spindles (5) carries a belt pulley (6) which is driven through a belt drive (7), the drive motor (9) of which is arranged on the side turned away from the drive spindle (5) of the shaft (4) carrying the two rocker arms (3, 3').

7. Circular saw according to Claim 1, characterised by the fact that the inner end of each inner shaft (12, 12') has a detachable supporting flange (29) which carries the saw blade (16 or 16'), and that the saw blade or saw blades (14, 15 or 14', 15') are fixed detachably on the hollow shaft (10 or 10') up to the supporting flange (29) of the inner shaft (12 or 12').

## Revendications

1. Scie circulaire comportant un châssis de machine (1) et plusieurs lames de scie (15, 15') disposées coaxialement, réglables axialement, qui sont chaque fois placées à l'extrémité d'un arbre creux (10, 10'), qui sont guidées de manière à ne pas pivoter, quoique à pouvoir coulisser axialement, dans une broche d'entraînement creuse reliée à un dispositif d'entraînement (6, 7, 8, 9), les arbres creux (10, 10') étant guidés de manière à pouvoir coulisser axialement sur un arbre intérieur (12, 12') et étant chaque fois reliés à un dispositif de réglage axial, caractérisée en ce que deux têtes de scie circulaire (2, 2'; 102, 102'), disposées en porte-à-faux, dressées l'une en face de l'autre, agencées coaxialement et à distance l'une de l'autre ont chaque fois l'arbre creux (10, 10') qui porte au moins une lame de scie (14, 14', 15, 15') à son extrémité intérieure, en ce que, à chaque tête de scie (2, 2'; 102, 102'), correspond un arbre intérieur séparé (12, 12'), disposé en porte-à-faux, qui est guidé dans chaque arbre creux (10, 10') de manière à ne pas pouvoir quoique à pouvoir coulisser axialement et qui porte chaque fois à son extrémité intérieure une autre lame de scie (16, 16'), et en ce que chaque arbre intérieur (12, 12') est également relié chaque fois à un dispositif de réglage axial (18).

2. Scie circulaire selon la revendication 1, caractérisée en ce que les deux broches d'entraînement (5) sont placées chaque fois dans une bielle oscillante (3, 3') et en ce que les deux bielles oscillantes (3, 3') sont fixées sur un arbre commun (4) logé de manière à pouvoir pivoter sur le châssis de machine (1).

3. Scie circulaire selon la revendication 2, caractérisée en ce que les dispositifs de réglage axial (17, 18) sont fixés aux deux bielles oscillantes (3, 3') et sont en prise avec les extrémités extérieures des arbres creux (10, 10') ou des arbres intérieurs (12, 12').

4. Scie circulaire selon la revendication 1, caractérisée en ce qu'une lame de scie médiane (26) est agencée entre les deux lames de scie (16, 16') portées par les arbres intérieurs (12, 12') sur un arbre de scie parallèle à ceux-ci.

5. Scie circulaire selon la revendication 1, caractérisée en ce que, parallèlement à l'axe des deux têtes de scie circulaire (2, 2') sont placées deux autres têtes de scie circulaire (102, 102'), construites de la même manière et également coaxiales entre elles et en ce que chaque fois les deux arbres intérieurs (12) et les deux arbres creux (10) des deux têtes de scie circulaire (2, 102 ou 2', 102') disposées toutes deux d'un côté de la machine sont chaque fois reliées par un porte-guide commun (120 ou 119) relié à un dispositif de réglage axial (17 ou 18) dans lequel les deux arbres intérieurs (12) ou les deux arbres creux (10) sont logés de manière à pouvoir pivoter quoique à ne pas pouvoir coulisser axialement.

6. Scie circulaire selon la revendication 2, caractérisée en ce que chacune des deux broches d'entraînement (5) porte une poulie (6) qui est actionnée par l'intermédiaire d'un entraînement à courroie (7) dont le moteur d'entraînement (9) est placé sur le côté opposé à la broche d'entraînement (5) de l'arbre (4) qui porte les deux bielles oscillantes (3, 3').

7. Scie circulaire selon la revendication 1, caractérisée en ce que l'extrémité intérieure de chaque arbre intérieur (12, 12') est muni d'une bride-support amovible (29) qui porte la lame de scie (16 ou 16') et en ce que la lame de scie ou les lames de scie (14, 15 ou 14', 15') sont fixées sur l'arbre creux (10 ou 10') de manière à pouvoir être retiré(es) vers la bride-support (29) de l'arbre inté-rieur (12 ou 12').

FIG. 1

0 106 907

FIG.2

F I G.3

FIG. 4

FIG. 5

FIG.6

FIG.7